# EUROPÄISCHE PATENTSCHRIFT

(11) **EP 0 702 755 B1**
(45) Veröffentlichungstag und Bekanntmachung des Hinweises auf die Patenterteilung: **09.09.1998**
(21) Anmeldenummer: 94916891.8
(22) Anmeldetag: 07.06.1994
(51) Int. Cl.: F04C 15/04, F04B 49/00

(54) **MEHRSTUFENREGLER FÜR SCHMIERMITTELPUMPEN MIT KONTINUIERLICH VERÄNDERBAREM FÖRDERVOLUMEN**
MULTI-STAGE REGULATOR FOR LUBRICANT PUMPS WITH CONTINUOUSLY VARIABLE FEED RATE
REGULATEUR A PLUSIEURS ETAGES POUR POMPES A LUBRIFIANT A DEBIT CONTINUELLEMENT VARIABLE

(30) Priorität: 09.06.1993 DE 4319200
(43) Veröffentlichungstag der Anmeldung: 27.03.1996
(73) Patentinhaber: DAIMLER-BENZ AKTIENGESELLSCHAFT, 70567 Stuttgart (DE)
(72) Erfinder: LEHMANN, Uwe, D-55286 Wörrstandt (DE); STICH, Bodo, D-65191 Wiesbaden (DE); WILHELM, Maik, D-65468 Trebur (DE)
(74) Vertreter: Weber, Dieter, Dr.
(86) Internationale Anmeldenummer: DE9400642
(87) Internationale Veröffentlichungsnummer: WO9429595

(56) Entgegenhaltungen:
- DE-A- 1 528 616
- DE-A- 2 806 965
- DE-A- 3 333 647
- US-A- 3 415 058
- US-A- 4 325 215

## Beschreibung

Die vorliegende Erfindung betrifft einen Regler für Pumpen, insbesondere für Schmiermittelpumpen, mit einem Stellkolben, welcher durch einen von der Ausgangsseite der Pumpe abgeleiteten Druck beaufschlagbar ist und bei zunehmendem Druck gegen die Kraft eines nachgiebigen Rückstellelementes verschiebbar ist.

Ein solcher Regler ist z. B. von einer, in der DE-33 33 647-A1 dargestellten Flügelzellenpumpe bekannt. Bei dieser wird ein Kolben mit kreisförmigem Querschnitt in einem Zylinder geführt und über eine Abzweigungsleitung von der Ausgangsseite der Pumpe her mit Druck beaufschlagt. Eine Gegendruckfeder setzt dabei einer Bewegung des Kolbens im Zylinder unter der Wirkung des Pumpdruckes Widerstand entgegen. Zwischen Kolben und Feder befindet sich ein Mitnehmerzapfen des Stellringes der Flügelzellenpumpe. Durch Verschiebung oder Verschwenkung des Stellringes relativ zum Rotor der Flügelzellenpumpe wird die Exzentrizität der Flügelzellenpumpe verändert und damit auch das Fördervolumen der einzelnen Zellen der Pumpe sowie insgesamt die hydraulische Pumpleistung. Die relative Anordnung von Kolben, Feder, Rotor, Stellring und Mitnehmerzapfen ist dabei so gewählt, daß mit steigendem Druck unter der Wirkung des sich dann zunehmend gegen die Kraft der Druckfeder vorbewegenden Kolbens der Stellring über den Mitnehmerzapfen in Richtung kleinerer Exzentrizität relativ zum Rotor gedrückt wird, so daß die Pumpleistung abnimmt und der Ausgangsdruck sinkt bzw. konstant gehalten wird. Über die vorgebbaren Pumpenparameter, d. h. konkret die Geometrie und Größe von Rotor und Stellring, deren maximale und minimale Exzentrizität, bestimmt durch den maximalen Stellweg des Systems Kolben-Feder-Mitnehmerzapfen, sowie die Federcharakteristik bestimmen die Eigenschaften des Reglers, d.h. vor allem den Maximaldruck, der am Pumpenausgang auftreten kann. Wie schnell dieser Maximaldruck erreicht wird, d.h. konkret bei welcher Drehzahl der Pumpe dieser Maximaldruck erreicht wird, hängt dabei auch von dem der Pumpe nachgeschalteten Verbraucher ab, der eine Drucksenke mit einem mehr oder weniger veränderlichen und im allgemeinen temperaturabhängigen Fließwiderstand darstellt.

Derartige Pumpen findet man häufig an Verbrennungsmotoren, die im allgemeinen über einen größeren Drehzahlbereich und bei variablen Betriebstemperaturen benutzt werden. Dabei ist die Pumpenwelle üblicherweise unmittelbar mit der Kurbelwelle des Motors verbunden, dreht also mit derselben Drehzahl wie der Motor oder zumindest mit einer hierzu proportionalen Drehzahl.

Trägt man (bei einer gegebenen Temperatur) den von einer solchen Pumpe erzeugten Öldruck über der Motordrehzahl auf, so findet man normalerweise einen mehr oder weniger linearen Anstieg bis auf einen vorgebbaren Maximalwert, von z.B. ca. 5 bar, wobei oberhalb der Drehzahl, bei welcher dieser Wert erreicht wird, der Druck durch den Regler annähemd konstant gehalten wird.

Der für einen Verbrennungsmotor erforderliche Öldruck ist ebenfalls drehzahlabhängig, vor allem deshalb, weil der Motor Drehlager und rotierende Teile aufweist und das Schmiermittel teilweise von außen gegen die Wirkung der Fliehkraft rotierender Teile radial nach innen befördert werden muß, um eine ausreichende Schmierung derartiger Bereiche sicherzustellen. Damit ergibt sich im allgemeinen ein nicht linearer Anstieg des erforderlichen Mindestöldruckes mit zunehmender Drehzahl.

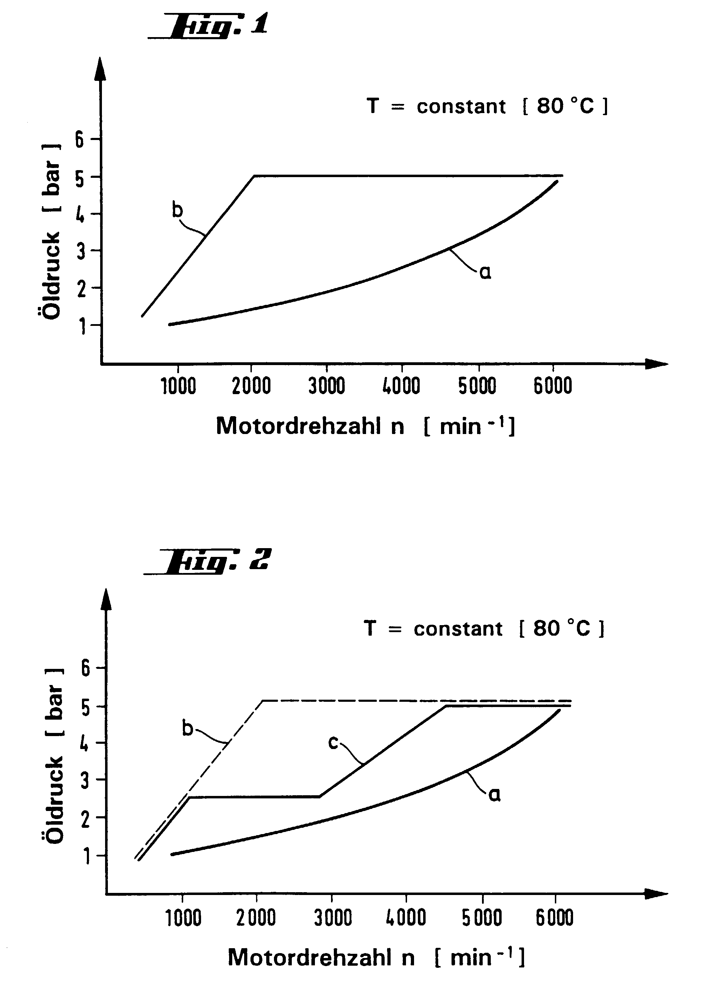

Der Verlauf des Mindestöldruckes für einen typischen Verbrennungsmotor ist anschaulich als Kurve a in Figur 1 dargestellt, wobei gleichzeitig als Kurve b auch der Verlauf des Öldruckes einer mit einem Motor gekoppelten Schmierölpumpe mit Druckbegrenzung gezeigt wird.

Die hydraulische Leistung einer Pumpe ergibt sich aus dem Produkt des geförderten Volumenstromes mit der Druckdifferenz zwischen Ausgang und Eingang der Pumpe. Regelbare Schmiermittelpumpen wie z. B. Flügelzellenpumpen haben dabei die Eigenschaft, daß sie den Druck als Regelparameter verwenden, da nämlich der Druck mittelbar oder unmittelbar auf ein Stellglied wirkt, welches die Exzentrizität des Hubringes verändern kann, so daß die Regelgröße, d.h. das was unter Ansprechen auf den Parameter Druck an der Pumpe verändert wird, der Volumenstrom durch die Pumpe ist, da durch Veränderung der Exzentrizität des Stellringes das Fördervolumen verändert wird. Die Konstruktion der regelbaren Flügelzellenpumpe bringt es dabei mit sich, daß, zumindest über einen weiten Teil des verfügbaren Drehzahlbereiches hinweg, der Druck am Ausgang der Pumpe durch Anpassen des Fördervolumens konstant gehalten wird. Da sich jedoch der Fließwiderstand z.B. in einem Motor auch in Abhängigkeit von der Betriebstemperatur ändert, wird sich im allgemeinen auch der zur Aufrechterhaltung eines bestimmten Druckes erforderliche Förderstrom mindestens in Abhängigkeit von der Temperatur ändern. Unabhängig von dem konkreten Zusammenhang zwischen Fördervolumen und -druck hat jedoch ein Verbraucher, wie z.B. ein Motor, in einem gegebenen Betriebszustand einen bestimmten Mindestbedarf an Schmiermittel, und zwar sowohl hinsichtlich des Schmiermitteldruckes als auch hinsichtlich der Schmiermittelmenge. Herkömmliche, geregelte Flügelzellenpumpen regeln jedoch nur eine dieser Größen, wobei sich die andere Größe jeweils entsprechend dem gegebenen Fließwiderstand anpaßt. Dabei werden die Pumpen generell auf den Maximalbedarf des Motors hinsichtlich Schmiermittelmenge und Schmiermitteldruck ausgelegt. Daher ist bei den Druckregelsystemen, wie sie allgemein von Schmiermittelpumpen und speziell von Flügelzellenpumpen bekannt sind, vor allem im mittleren Drehzahlbereich der tatsächlich von den Pumpen zur Verfügung gestellte Druck und auch die geförderte Schmiermittelmenge wesentlich größer als dem aktuellen Bedarf des Verbrauchers, konkret des Verbrennungsmotors, entspricht. Die damit verbundene, überschüssige hydraulische Leistung der Pumpe bedingt deren unnötig hohen Verbrauch an Antriebsenergle. Das heißt, trotz einer gewissen Verbesserung gegenüber Konstantpumpen, deren Förderstrom einfach über Druckbegrenzungsventile teilweise abgeleitet wird, arbeiten auch druckgeregelte Schmiermittelpumpen in weiten Bereichen noch nicht bedarfsabgestimmt

Gegenüber diesem Stand der Technik liegt der vorliegenden Erfindung die Aufgabe zugrunde, einen Regler für regelbare Schmiermittelpumpen zu schaffen, der bei möglichst einfacher Bauweise eine qualitativ günstigere Regelcharakteristik ermöglicht, die dem tatsächlichen Bedarf des Motors hinsichtlich Druck und Fördervolumen des Schmiermittels besser entspricht und somit weitgehend verlustfrei, d.h. ohne erbebliche überschüssige hydraulische Leistung, arbeitet.

Diese Aufgabe wird dadurch gelöst, daß der Stellkolben aus mehreren, gleichzeitig vom Systemdruck beaufschlagbaren Teilkolben besteht, die über einen begrenzten Stellweg gleichzeitig parallel bewegbar sind, wobei für mindestens einen der Teilkolben ein Anschlag vorgesehen ist, der dessen Stellweg gegen die Kraftrichtung des Rückstellelementes bei zunehmendem Ausgangsdruck der Pumpe begrenzt, wobei mindestens ein weiterer Teilkolben gegen die Kraft des Rückstellelementes bewegbar bleibt.

Solange die Teilkolben, aus welchen der Stellkolben des erfindungsgemäßen Reglers besteht, sich als gemeinsame Einheit parallel bewegen, hat ein solcher Regler den gleichen qualitativen Druckverlauf wie der bereits eingangs beschriebene Regler für herkömmliche, regelbare Flügelzellenpumpen. Das heißt, während bei sehr niedrigen Drehzahlen der Ausgangsdruck der Pumpe mit zunehmender Drehzahl zunächst relativ steil ansteigt, ohne daß der Regelmechanismus in nennenswertem Umfang in Aktion tritt, bewegen sich die Teilkolben, die von dem Ausgangsdruck der Pumpe beaufschlagt werden, schließlich gegen die Kraft eines Rückstellelementes, d.h. im allgemeinen einer Druckfeder, und reduzieren damit das Fördervolumen der Pumpe und somit auch deren hydraulische Leistung. Dabei stellt sich im allgemeinen über einen größeren Drehzahlbereich hinweg ein mehr oder weniger konstanter Druck ein. Erst wenn mit weiter steigender Drehzahl und einer daraus resultierenden weiteren Verschiebung der Teilkolben einer dieser Teilkolben an einen Anschlag stößt, wird dessen weiterer Stellweg begrenzt und die Kraft, die von dem oder den übrigen Teilkolben noch gegen das Rückstellelement ausgeübt wird, ist wegen der kleineren Fläche der bzw. des noch bewegbaren Teilkolben(s), auf welche(n) der Steuerdruck wirkt, nicht ausreichend, um eine weitere Verschiebung dieser Teilkolben gegen die Kraft des Rückstellelementes zu bewirken. Da dann also das Fördervolumen mit zunehmender Drehzahl steigt, nimmt auch der Ausgangsdruck der Pumpe weiter zu, bis schließlich ein zweiter Grenzdruck erreicht wird, bei welchem die Kraft auf den oder die noch bewegbaren Teilkolben ausreicht, daß diese sich gegen die Kraft des Rückstellelementes bewegen und damit einen Schieber, ein Stellglied oder sonstiges Element der Pumpe zu bewegen, durch welches deren Fördervolumen und damit auch der Ausgangsdruck auf ein gegenüber dem ersten Grenzdruck höheres Niveau begrenzt wird.

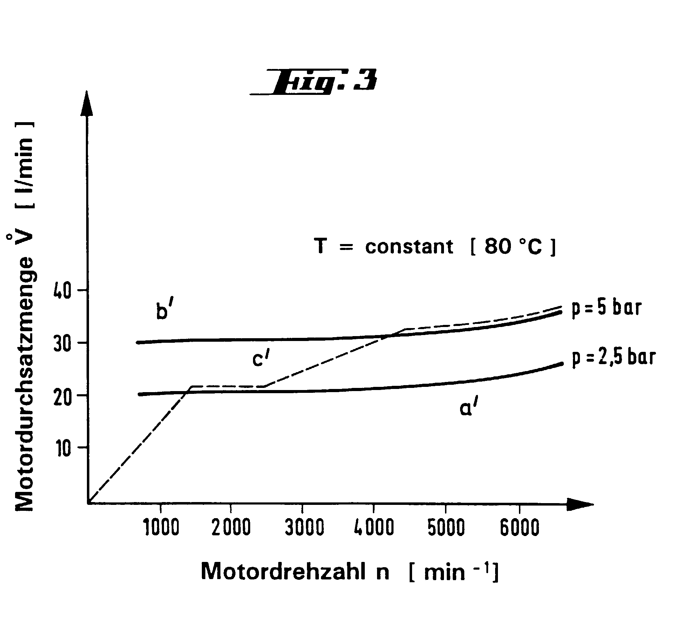

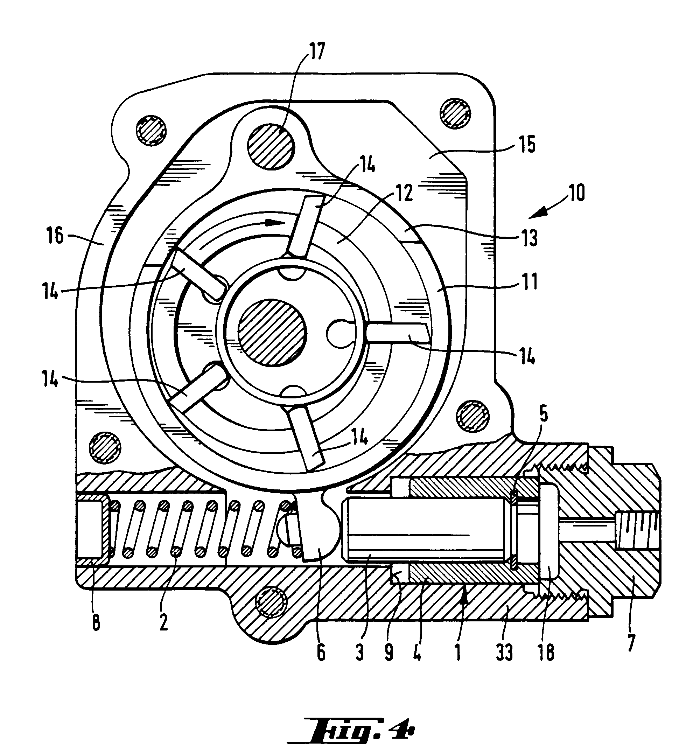

Der qualitative Verlauf der resultierenden Druckkurve über der Drehzahl ist in Figur 2 als Kurve c wiedergegeben, wobei in Figur 2 auch der Verlauf der Kurve b entsprechend Figur 1 nochmals gestrichelt eingezeichnet ist. Wie man erkennt, ist die Kurve c der Kurve a des Mindestöldruckes wesentlich besser "angepaßt als die Kurve b und die Pumpe fördert vor allem in einem mittleren Drehzahlbereich das Öl unter einem geringeren Druck und damit auch geringere Mengen (Fig. 3), was zu einer entsprechenden Herabsetzung der für die Pumpe erforderlichen Antriebsleistung führt.

In der bevorzugten Ausführungsform der Erfindung ist ein erster Teilkolben ein äußerer Ringkolben, während ein zweiter Teilkolben ein innerer Zentralkolben ist. Das heißt, der innere Zentralkolben ist innerhalb des äußeren Ringkolbens bewegbar, wobei zweckmäßigerweise diese Bewegung mindestens in einer Richtung begrenzt ist, damit beide Teilkolben sich bei entsprechenden Betriebszuständen als eine Einheit bewegen.

Zweckmäßigerweise steht der Zentralkolben mit einer als Rückstellelement dienenden Druckfeder in Eingriff, während der Ringkolben einen Mitnehmer aufweist, durch welchen der Zentralkolben gegen die Kraft der Druckfeder mitgenommen wird, wenn ein entsprechender Druck auf die Kolben wirkt, so daß sich die auf die Druckfeder wirkenden Kräfte des Zentralkolbens und des Ringkolbens insgesamt addieren. In einer bevorzugten Ausführungsform der Erfindung ist der Mitnehmer in Form eines in eine Nut an der Innenseite des Zentralkolbens eingelassenen Sicherungsringes vorgesehen.

Der äußere Ringkolben und der innere Zentralkolben könnten zwar grundsätzlich voneinander unabhängige Führungen, wie z.B. Führungsbuchsen und dergleichen aufweisen, bevorzugt ist jedoch eine Ausführungsform der Erfindung, bei welcher der Ringkolben als Führungshülse bzw. Zylinder für den Zentralkolben dient, so daß also der Außendurchmesser des Zentralkolbens annähernd gleich dem Innendurchmesser des Ringkolbens ist und beide Kolben in enger Gleitpassung zueinander stehen.

Eine konkrete Ausführungsform der Erfindung sieht außerdem vor, daß ein Führungszylinder mit einem ersten Zylinderraum für die Führung des Ringkolbens vorgesehen ist, so daß also dieser erste Zylinderraum einen Innendurchmesser hat, welcher annähernd dem Außendurchmesser des Ringkolbens entspricht, wobei dieser erste Zylinderraum sich stufenförmig verjüngt und so an einen zweiten Zylinderraum angrenzt, dessen Innendurchmesser mindestens so groß ist wie der Außendurchmesser des Zentralkolbens, wobei zweckmäßigerweise auch die Achsen von Zentralkolben, Ringkolben sowie der beiden Zylinderräume des Führungszylinders miteinander fluchten sollten. Es ist jedoch nicht notwendig, daß der zweite Zylinderraum eine Führung für den Zentralkolben bildet, zumindest dann nicht, wenn dieser bereits in dem Ringkolben dicht geführt wird.

Bei dieser Ausführungsform wirkt die stufenförmige Verjüngung des ersten Zylinderraumes zum zweiten Zylinderraum als ein Anschlag für den Ringkolben, während der Zentralkolben sich bei einer entsprechenden Druckbeaufschlagung gegen die Wirkung einer Druckfeder weiter in den zweiten Zylinderraum hineinbewegen kann, wobei letzterer nicht notwendigerweise zylindrisch sein muß.

Der erfindungsgemäße Mehrstufenregler kann selbstverständlich auch zusätzlich Ringkolben zwischen dem (äußeren) Ringkolben und dem Zentralkolben aufweisen, die sukzessive nach dem äußeren Kolben mit jeweils zugeordneten Anschlägen in Eingriff treten, und der Zentralkolben kann seinerseits auch als Hohlzylinder ausgebildet sein.

Besonders bevorzugt ist eine Ausführungsform der Erfindung, bei welcher der Anschlag für den mindestens einen der Teilkolben, vorzugsweise für den erwähnten Ringkolben, variabel ist und zwar vorzugsweise varlabel in Abhängigkeit von der Temperatur und zwar derart, daß bei niedriger Temperatur ein größerer Stellweg für den anschlagenden Teilkolben zur Verfügung steht als bei höherer Temperatur.

Bei einem festen Anschlag und bei niedriger Temperatur des Schmiermittels baut sich ein höherer Druck bereits bei relativ niedrigen Drehzahlen auf, was bedeutet, daß der erste Teilkolben relativ früh anschlägt und das Fördervolumen bzw. der Förderdruck daraufhin schon frühzeitig von dem ersten Druckregelniveau auf das höhere Niveau bei relativ Weinen Drehzahlen ansteigt. Dagegen gelingt es mit einem variablen Anschlag, den Zeitpunkt des Anschlages vor allem niedrigen Schmiermitteltemperaturen zu verzögern bzw. zu größeren Drehzahlen hin zu verlagern.

Daneben ist es selbstverständlich auch möglich, den erfindungsgemäßen Mehrstufenregler nicht nur in Form von ineinandergeschachtelten Ringkolben auszubilden, sondern entsprechende Kolben könnten auch nebeneinander angeordnet sein, wobei sie anfangs gemeinsam eine Kraft auf den Stellring ausüben und nach einem vorgebbaren Verstellweg einer oder mehrere der Kolben gegen einen Anschlag gehen.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: den Druckverlauf über der Motordrehzahl bei einer herkömmlichen, geregelten Flügelzellenpumpe sowie den für einen Motor typischen Mindestöldruck in Abhängigkeit von der Drehzahl,
- Figur 2: eine Figur 1 entsprechende Darstellung von Öldruckkurven, wobei zusätzlich die Regelcharakteristik für den erfindungsgemäßen Druckregler dargestellt ist,
- Figur 3: die aus Kurve c gemäß Figur 2 resultierenden Motordurchsatzmengen in Abhängigkeit von der Drehzahl für verschiedene konstante und variable Drücke,
- Figur 4: einen Schnitt durch eine Flügelzellenpumpe mit der erfindungsgemäßen Druckregeleinrichtung,
- Figur 5: die Regelcharakteristik eines mehrstufigen Reglers mit festem Anschlag bei verschiedenen Temperaturen,
- Figur 6: eine durch einen temperaturabhängig variablen Anschlag optimierte Regelcharakteristik des erfindungsgemäßen Mehrstufenreglers und
- Figur 7: den Regelteil einer Flügelzellenpumpe mit variablem Anschlag.

Figur 1 zeigt für einen Verbrennungsmotor den Verlauf zweier Öldruckkurven a, b über der Motordrehzahl. Dabei gibt die Kurve a den Mindestöldruck wieder, den der Motor bei der jeweiligen Drehzahl zur Aufrechterhaltung einer sicheren Schmierung aller Motorteile benötigt, während die Kurve b den Druckverlauf wiedergibt, der von einer geregelten Schmiermittelpumpe, konkret einer geregelten Flügelzellenpumpe, tatsächlich erzeugt wird. Dabei hängt die Steilheit des Anfangsanstieges der Kurve b auch von der jeweiligen Betriebstemperatur bzw. von dem Fließwiderstand der Ölverbrauchsstellen und -zuleitungen ab. Der überproportionale Anstieg der Kurve a mit wachsender Drehzahl hängt vor allem damit zusammen, daß Lager und andere drehende Teile von außen mit Schmiermittel versorgt werden müssen und daß dabei das Schmiermittel bzw. Öl teilweise gegen die Wirkung der Fliehkraft radial nach innen gedrückt werden muß, wobei die Fliehkraft quadratisch mit der Drehzahl zunimmt.

Der Verlauf der Kurve b ergibt sich vor allem daraus, daß das Fördervolumen einer Flügelzellenpumpe näherungsweise proportional zur Drehzahl ist, so daß bei konstantem Fließwiderstand zunächst der Druck mit wachsender Drehzahl relativ schnell ansteigt, gleichzeitig jedoch der aus einer Kolben und einer Feder bestehende Regelmechanismus das Fördervolumen herabregelt und schließlich so begrenzt, daß sich ab einer bestimmten Drehzahl ein im wesentlichen konstanter Ausgangsdruck einstellt. Dieser konstante Ausgangsdruck muß jedoch mindestens dem Druck entsprechen, der bei der höchstmöglichen Drehzahl und der höchsten Betriebstemperatur vom Motor benötigt wird.

Da andererseits das maximale geometrische Fördervolumen einer Schmiermittelpumpe auf den zweiten kritischen Betriebspunkt, nämlich minimale Drehzahl und maximale Öltemperatur, ausgelegt werden muß, wird im allgemeinen der maximale Ausgangsdruck selbst bei heißem Motoröl bereits weit unterhalb der Höchstdrehzahl erreicht.

Man erkennt aus Figur 1, daß vor allem im mittleren Drehzahlbereich der durch die Pumpe bereitgestellte Druck wesentlich größer ist als der vom Motor benötigte Mindestöldruck. Gleichzeitig wird aufgrund dieses höheren Druckes auch eine größere Ölmenge durchgesetzt, wobei die hydraulische Pumpenleistung dem Produkt aus Druck und pro Zeiteinheit durchgesetzter Ölmenge proportional ist. Sind also Druck und durchgesetzte Ölmenge jeweils doppelt so hoch wie bei einem auf den Mindestbedarf eingestellten Öldruck, so beträgt die dafür erforderliche hydraulische Leistung das Vierfache der erforderlichen Mindestleistung.

Man erkennt also, daß es unter dem Gesichtspunkt einer geringeren Leistungsaufnahme der Pumpe und damit auch einer Verringerung des Energieverbrauchs des Motors sinnvoll wäre, gerade im mittleren Drehzahlbereich den von der Pumpe bereitgestellten Öldruck dem für den Motor erforderlichen Mindestöldruck anzunähem. Dies geschieht mit einem Regler gemäß der vorliegenden Erfindung, der, hier beispielhaft für zwei zweistufige Regelung dargestellt, einen Druckverlauf einstellt, wie er In Figur 2 durch die Kurve c qualitativ wiedergegeben wird. Zum besseren Vergleich ist auch eine Kurve b entsprechend der Kurve b in Figur 1 gestrichelt in Figur 2 eingezeichnet.

Man erkennt aus Figur 2, daß besonders in dem Bereich, wo der Abstand zwischen den Kurven a und b am größten ist und damit die Pumpe besonders viel überschüssige hydraulische Pumpleistung abgeben und entsprechende Antriebsleistung aufnehmen würde, der Druckverlauf gemäß Kurve c erheblich abgesenkt und der Kurve a sehr viel näher ist, so daß die Pumpe auch entsprechend weniger Leistung aufnimmt, wenn ihr Ausgangsdruck entsprechend der Kurve c eingestellt wird.

In Figur 3 sind in verschiedenen Kurven Durchsatzmengen von Schmiermittel über der Motordrehzahl aufgetragen. Die Kurven a' und b' geben jeweils die Motordurchsatzmengen wieder, die man erhalten würde, wenn man den Druck jeweils auf einen konstanten Wert von 2,5 bar bzw. 5 bar einstellen würde (entsprechen den Grenzdrücken der Kurve c In Figur 2). Wie man aus Figur 2 erkennt, sind dies in etwa die beiden Druckstufen, auf welchen der erfindungsgemäße Druckregler den Ausgangsdruck einer Flügelzellenpumpe gemäß Kurve c über einen gewissen Drehzahlbereich konstant hält. In Form der Kurve c' ist in Figur 3 schließlich die tatsächliche Motordurchsatzmenge angegeben, die man erhält, wenn der Druck gemäß Kurve c in Figur 2 eingeregelt wird. Es ist klar, daß der Durchsatzmengenverlauf in den Bereichen, wo der Druck konstant gehalten wird, auch den Isobaren in Figur 3 folgt. Man sieht jedoch auch aus Figur 2, daß ein konstanter Druck von 2,5 bar bei hohen Drehzahlen nicht ausreichend wäre, um den Motor sicher zu schmieren, so daß der Übergang auf einen höheren Druck und auf eine höhere Durchsatzmenge notwendig ist und gemäß den Kurven c und c' in den Figuren 2 und 3 auch erfolgt.

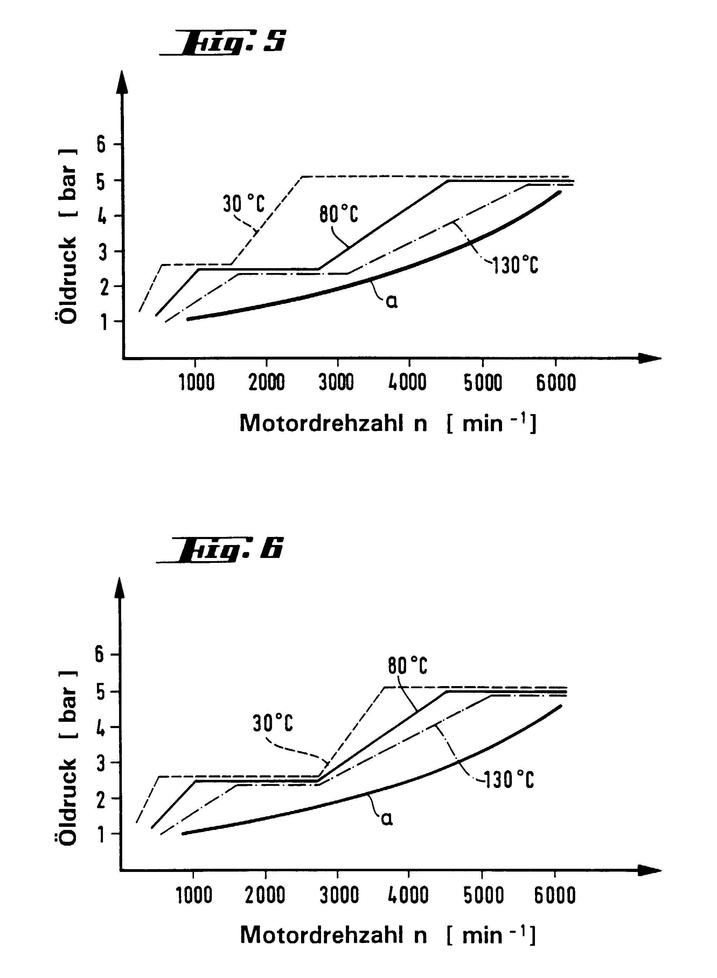

Erreicht wird der Kurvenverlauf c und c' in den Figuren 2 und 3 durch eine beispielhaft dargestellte Flügelzellenpumpe mit einem Druckregler, wie er in Figur 4 schematisch dargestellt ist.

Figur 4 zeigt eine Flügelzellenpumpe 10 mit einem Gehäuse 16, einem Rotor 12, vom Rotor mitgenommenen Flügeln 14 und einem Stellring 11. Der Stellring 11 hat radiale Einlaßöffnungen 13, durch welche das zwischen den Flügeln 14 und dem Stellring 11 gebildete Zellvolumen, das sich bei der dargestellten Rotationsrichtung im oberen Teil des Stellringes in Drehrichtung vergrößert, aus dem Saugraum 15 Öl angesaugt wird. Im unteren Bereich des Stellringes, wo sich in Drehrichtung das Zellvolumen zunehmend verkleinert, wird das Öl durch nicht dargestellte bzw. nicht sichtbare axiale Austrittsöffnungen herausgedrückt. Das Fördervolumen pro Umdrehung des Rotors hängt von der Differenz der Volumenänderungen der einzelnen Zellen im oberen und unteren Bereich des Stellringes ab, die wiederum durch die Exzentrizität des Stellringes 11 bezüglich des Rotors 12 bestimmt wird. Der Stellring 11 ist schwenkbar gelagert und weist an seinem unteren Ende entfernt von der Schwenkwelle 17 einen Stellzapfen 6 auf, der mit einem Stellkolben 1 einerseits und einer Druckfeder 2 andererseits in Eingriff steht. Die Feder 2 ist in einer Aussparung im Gehäuse 16 aufgenommen und wird durch eine eingepreßte Hülse 8 abgestützt. Der Stellkolben 1 besteht aus einem Zentralkolben 3, der mit dem Zapfen 6 in Eingriff steht und somit direkt gegen die Kraft der Feder 2 wirkt, und einem den Zentralkolben 3 dicht führenden Ringkolben 4. Auch der Ringkolben 4 und der Zentralkolben 3 sind in einer Aussparung des Gehäuses 16 aufgenommen, wobei der Ringkolben 4 druckdicht, aber gleitbar in der ihn aufnehmenden Gehäuseaussparung geführt ist. Ein Anschlußstopfen 7 sichert den Kolben 1 im Gehäuse 16 und stellt gleichzeitig eine Druckzufuhröffnung bereit, von welcher her der Zentralkolben 3 und der Ringkolben 4 mit dem Ausgangsdruck der Pumpe beaufschlagt werden. In dem Raum 18 zwischen dem Stopfen 7 und dem Stellkolben 1 herrscht also der von der Pumpe erzeugte Ausgangsdruck oder Systemdruck p. Dieser wirkt sowohl auf die Stirnfläche des Zentralkolbens 3 als auch auf die Stirnfläche des Ringkolbens 4. In der Innenwand des Ringkolbens 4 ist eine umlaufende Nut vorgesehen, in welcher ein Sicherungsring 5 aufgenommen ist, der dafür sorgt, daß der Ringkolben 4 bei einer Bewegung nach links in Figur 4 mit dem Sicherungsring an der Stimseite des Zentralkolbens 3 anschlägt und diesen zwangsweise mitnimmt, soweit die von der Feder 2 ausgeübte Gegenkraft dies zuläßt. Solange der Sicherungsring 5 des Ringkolbens 4 mit der Stimseite des Zentralkolbens 3 in kraftschlüssigem Eingriff steht, wirken die beiden Teilkolben 3, 4 als ein einheitlicher Kolben, der mit einer Kraft gegen den Zapfen 6 und damit gegen die Druckfeder 2 drückt, welche dem Produkt aus dem herrschenden Druck multipliziert mit der gesamten Stirnfläche der beiden Teilkolben 3, 4 entspricht.

Da das Fördervolumen der Pumpe relativ empfindlich auf kleine Verstellungen des Stellringes 11 bzw. des Stellzapfens 6 reagiert, erreicht man mit einem derartigen Regelmechanismus, daß sich in Abhängigkeit von der Kolbenfläche der Kolben 3, 4 und der Federkonstanten der Druckfeder 2 über einen gewissen Drehzahlbereich der Pumpe hinweg ein im wesentlichen konstanter Druck einstellt, der gemäß Figur 2 z.B. ca. 2,5 bar betragen kann. Bei zunehmender Drehzahl gerät jedoch die vordere Stimseite des Ringkolbens 4 schließlich an einen Anschlag 9, der durch einen stufenförmigen Übergang des zylindrischen Führungsraumes für den Ringkolben 4 auf einen zylindrischen Raum kleineren Durchmessers gebildet wird, in welchem sich jedoch der Zentralkolben 3 noch mit Spiel bewegen kann. Steigt nun die Drehzahl weiter und damit auch der Druck, so kann der Ringkolben 4 nicht mehr zu einer Verschiebung des Stellzapfens 6 beitragen, da die auf seine rechte Stirnselte wirkende Druckkraft von dem Anschlag 9 aufgefangen wird und nicht mehr auf den Zentralkolben 3 übertragen werden kann. Mit zunehmender Drehzahl wird also in diesem Stadium der Druck weiter ansteigen, bis schließlich die allein auf die Stimfläche des Zentralkolbens 3 wirkende Druckkraft ausreicht, die Gegenkraft der Feder 2 zu überwinden, woraufhin der Druck wieder auf ein im wesentlichen konstantes Niveau, allerdings nunmehr ein höheres Niveau von ca. 5 bar (siehe Figur 2) eingeregelt wird.

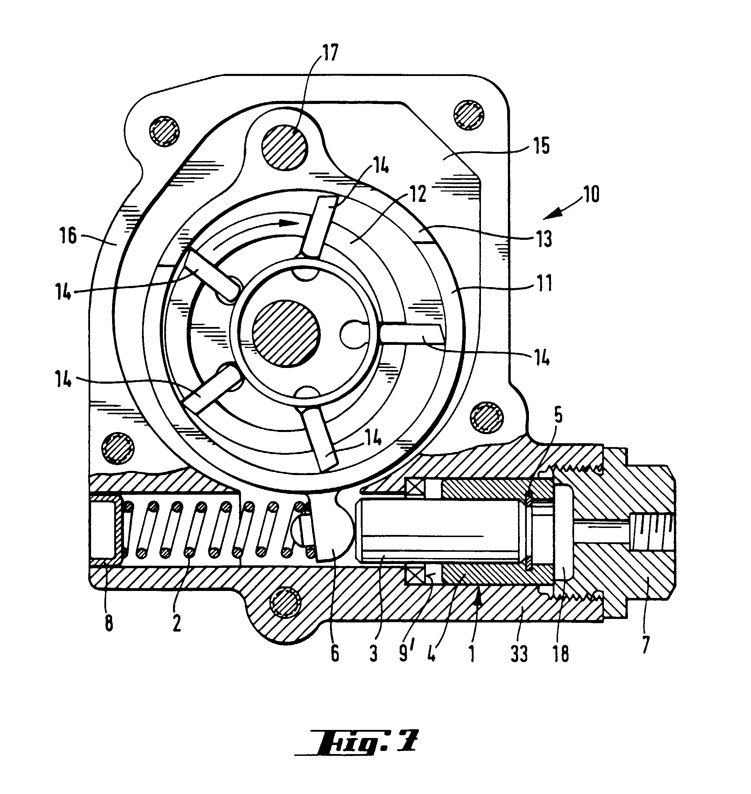

Figur 5 gibt die Kurve c aus Figur 2 für drei verschiedene Temperaturen des Schmiermittels, nämlich für 30°C, 80°C und 130°C, wieder. Die Kurven sind, vorzugsweise mit Blick auf die Regelmechanik der Figuren 4 bzw. 7, folgendermaßen zu interpretieren. Im Falle der gestrichelten Kurve für eine Schmiermitteltemperatur von ca. 30°C erfolgt bei sehr niedrigen Drehzahlen zunächst ein kontinuierlicher Anstieg des Öldruckes, bis der Regler überhaupt in Aktion tritt. Mit zunehmender Drehzahl erhöht sich Fördervolumen und Druck, so daß bei einem Druck von ca. 2,5 bar die Regelmechanik zu wirken beginnt, indem beide Kolben gegen die Wirkung eines Rückstellelementes wie der Feder 2 in Figur 4 den Hubring 11 verstellen und damit den Druck konstant halten. Schließlich stößt der äußere Ringkolben 4 gegen den Anschlag 9, so daß die allein auf den Teilkolben 3 noch wirkende Kraft nicht ausreicht, die Feder 2 weiter zusammenzudrücken. Damit ist der Regler zunächst wieder inaktiv, so daß Druck und Volumenstrom wieder mit der Drehzahl ansteigen können, was durch den Anstieg zwischen 2,5 und 5 bar in Figur 5 auch zeichnerisch wiedergegeben ist. Der Moment des Aufsetzens des Ringkolbens 4 auf dem Anschlag 9 ist also durch den Knick der Öldruckkurve über der Motordrehzahl am Ende des 2,5-bar-Niveaus gekennzeichnet. Wenn der Druck von 5 bar erreicht ist, reicht auch die auf den Teilkolben 3 wirkende Kraft wieder aus, den Stellring 11 gegen die Wirkung der Feder 2 zu verschieben, so daß dann der Druck bis zur maximalen Drehzahl auf dem konstanten Niveau von ca. 5 bar gehalten wird.

Bei höherer Temperatur fließt das Schmiermittel leichter durch die Leitungen und sonstige Strömungswiderstände, wie Gleitlager, hindurch, was zur Folge hat, daß der Verlauf des Öldruckes über der Motordrehzahl zwar qualitativ der gleiche ist, quantitativ jedoch einen flacheren Anstieg und eine Verschiebung der Schaltpunkte zu höheren Drehzahlen zeigt. Das heißt, beide Teilkolben setzen sich gemeinsam erst bei einer höheren Drehzahl in Bewegung, wenn nämlich in etwa das Zwischenniveau von 2,5 bar erreicht ist und halten aufgrund ihrer Einwärtsbewegung den Druck im wesentlichen konstant, bis der äußere Ringkolben 4 wiederum gegen den Anschlag stößt und ein emeuter Druckanstieg bis auf ca. 5 bar erfolgt. Wie in Figur 5 dargestellt, sind die Kurvenverläufe bei 80°C und 130°C zunehmend flacher und die Schaltpunkte, insbesondere also auch der Anschlag des äußeren Ringkolbens 4 an dem entsprechenden Anschlag 9, sind mit steigender Temperatur zu höheren Drehzahlen hin verschoben. Durch einen temperaturabhängigen Anschlag kann man jedoch erreichen, daß sich zumindest der Anschlag des äußeren Ringkolbens auch für niedrige Temperaturen in Richtung höherer Drehzahlen verschiebt, d.h. näher an die Idealkurve bzw. Motorbedarfskurve a herankommt. Dieses Verhalten ist in Figur 6 dargestellt und wird durch einen temperaturabhängigen Anschlag 9' erzielt, wie er bei einem Regler gemäß Figur 7 dargestellt ist. Bei dem temperaturabhängigen Anschlag 9' kann es sich beispielsweise um ein Ausdehnungselement handeln, wie es in Termostatventilen eingesetzt wird, wobei gegebenenfalls eine spezielle Anpassung an den neuen Einsatzzweck erfolgen muß, das Funktionsprinzip jedoch grundsätzlich dasselbe ist. Konkret arbeitet der temperaturabhängige Anschlag 9' so, daß der Anschlagpunkt für den Teilkolben 4 sich bei niedriger Temperatur nach links verschiebt, mit anderen Worten das Ausdehnungselement schrumpft bzw. sich zusammenzieht. Damit hat der Teilkolben 4 bei niedriger Schmiermitteltemperatur, die durch den engen Kontakt auch die Temperatur des Ausdehnungselementes bzw. temperaturabhängigen Anschlages 9' bestimmt, einen längeren Stellweg zur Verfügung, was konkret bedeutet, daß der zweite Schaltpunkt, also das Aufsetzen des Teilkolbens 4 auf dem Anschlag 9' im Vergleich zu Figur 5 erst bei einer höheren Drehzahl erfolgt. Mit wachsender Temperatur dehnt sich das Ausdehnungselement aus und der Anschlag 9' verschiebt sich weiter nach rechts und verkürzt damit den zur Verfügung stehenden Stellweg für den Teilkolben 4. Damit erreicht man, daß sich im Gegensatz zu Figur 5, der Beginn des Anstieges von dem 2,5 bar Niveau auf das 5 bar Niveau trotz des abnehmenden Strömungswiderstandes in dem System nicht weiter zu höheren Drehzahlen hin verschiebt, oder, anders gesprochen, bei niedrigeren Temperaturen ist dieser Schaltpunkt bereits so nahe an die Bedarfskurve a heran verschoben, daß mit steigender Temperatur ein weiteres Verschieben dieses Punktes an die Kurve a heran nicht erwünscht ist. Man kann so den in Figur 6 dargestellten, relativ günstigen Fall erhalten, daß der Anschlag des äußeren Ringkolbens 4 weitgehend von der Temperatur unabhängig ist, d.h. bei beliebiger Temperatur in etwa jeweils bei der gleichen Drehzahl stattfindet. Man erkennt, daß im Vergleich zu Figur 5 hierdurch auch bei niedrigeren Temperaturen bereits eine noch günstigere Annäherung an den Bedarf des Motors gemäß Kurve a erzielt wird, während der Verlauf bei hohen Temperaturen im wesentlichen unbeeinflußt bleibt.

## Patentansprüche

1. Regler für Schmiermittelpumpen mit kontinuierlich veränderbarem Fördervolumen, mit einem Stellkolben (1), welcher durch einen von der Ausgangsseite der Pumpe (10, 20) abgeleiteten Druck (P) beaufschlagbar ist und bei zunehmendem Druck gegen die Kraft eines nachgiebigen Rückstellelementes (2) verschiebbar ist, dadurch gekennzeichnet, daß der Regler als Mehrstufenregler ausgebildet ist, in dem der Stellkolben (1) aus mehreren, gleichzeitig vom Druck beaufschlagbaren Teilkolben (3, 4) besteht, die über einen begrenzten Stellweg gleichzeitig parallel bewegbar sind, wobei für mindestens einen der Teilkolben (4) ein Anschlag (9) vorgesehen ist, der dessen Stellweg gegen die Kraftrichtung des Rückstellelementes (2) bei zunehmendem Druck begrenzt, während der andere Teilkolben (3) weiterhin gegen die Kraft des Rückstellelementes (2) bewegbar bleibt.

2. Regler nach Anspruch 1, dadurch gekennzeichnet, daß ein erster Teilkolben ein innerer Zentralkolben (3) ist, der innerhalb des als äußerer Ringkolben (4) ausgebildeten zweiten Teilkolbens bewegbar ist.

3. Regler nach Anspruch 2, dadurch gekennzeichnet, daß der Zentralkolben (3) mit einer Druckfeder (2) als Rückstellelement in Eingriff steht und der Ringkolben (4) für die Mitbewegung des Zentralkolbens (3) einen Mitnehmer (5), vorzugsweise in Form eines Sicherungsringes aufweist.

4. Regler nach Anspruch 1 oder 2, dadurch gekennzeichnet, daß der Außendurchmesser des Zentralkolbens annähernd gleich dem Innendurchmesser des Ringkolbens ist, so daß der Zentralkolben in enger Gleitpassung in dem Ringkolben aufnehmbar ist.

5. Regler nach einem der Ansprüche 2 bis 4, dadurch gekennzeichnet, daß ein Führungszylinder (33) vorgesehen ist, mit einem ersten Zylinderraum, dessen Innendurchmesser annähernd dem Außendurchmesser des Ringkolbens (4) entspricht, wobei über eine stufenförmige Verjüngung des ersten Zylinderraumes ein zweiter Zylinderraum anschließt, dessen Innendurchmesser dem Außendurchmesser des Zentralkolbens (3) entspricht, wobei die Übergangsstufe zwischen den Zylinderräumen einen Anschlag (9) für den Ringkolben (4) bildet.

6. Regler nach einem der Ansprüche 1 bis 5, dadurch gekennzeichnet, daß der Anschlag (9) verstellbar ist.

7. Regler nach Anspruch 6, dadurch gekennzeichnet, daß der Anschlag (9) in Abhängigkeit von der Temperatur automatisch verstellbar ist.

8. Regler nach Anspruch 7, dadurch gekennzeichnet, daß die Richtung der Verstellbarkeit so gewählt wird, daß bei niedriger Temperatur für den anschlagenden Teilkolben (4) ein größerer Stellweg bereitgestellt wird.

9. Regler nach Anspruch 1, dadurch gekennzeichnet, daß die Teilkolben parallele, nicht ineinandergeschachtelte Kolben sind.

## Claims

1. A regulator for lubricant pumps with a continuously variable delivery volume, comprising a control plunger (1) which can be acted upon by a pressure (P) derived from the output side of the pump (10, 20) and which is displaceable with increasing pressure against the force of a resilient return element (2), characterised in that the regulator is in the form of a multi-stage regulator in which the control plunger (1) comprises a plurality of plunger portions (3, 4) which can be simultaneously acted upon by the pressure and which are simultaneously movable in parallel over a limited control travel, wherein provided for at least one of the plunger portions (4) is an abutment (9) which limits the control travel thereof in opposition to the direction of force of the return element (2) with increasing pressure while the other plunger portion (3) still remains movable against the force of the return element (2).

2. A regulator according to claim 1 characterised in that a first plunger portion is an inner central plunger (3) which is movable within the second plunger portion which is in the form of an outer annular plunger (4).

3. A regulator according to claim 2 characterised in that the central plunger (3) is in engagement with a compression spring (2) as the return element and the annular plunger (4) has an entrainment means (5), preferably in the form of a securing ring, for movement thereof with the central plunger (3).

4. A regulator according to claim 1 or claim 2 characterised in that the outside diameter of the central plunger is approximately equal to the inside diameter of the annular plunger so that the central plunger can be received in the annular plunger with a close sliding fit.

5. A regulator according to one of claims 2 to 4 characterised in that there is provided a guide cylinder (33) having a first cylinder chamber whose inside diameter approximately corresponds to the outside diameter of the annular plunger (4), wherein a second cylinder chamber is disposed in adjoining relationship by way of a stepped reduction in the first cylinder chamber, the inside diameter of the second cylinder chamber corresponding to the outside diameter of the central plunger (3), wherein the transitional step between the cylinder chambers forms an abutment (9) for the annular plunger (4).

6. A regulator according to one of claims 1 to 5 characterised in that the abutment (9) is adjustable.

7. A regulator according to claim 6 characterised in that the abutment (9) is adjustable automatically in dependence on temperature.

8. A regulator according to claim 7 characterised in that the direction of adjustability is so selected that a greater control travel is provided at low temperature for the plunger portion (4) which bears against the abutment.

9. A regulator according to claim 1 characterised in that the plunger portions are parallel plungers which are not fitted one within the other.

## Revendications

1. Régulateur pour pompes à lubrifiant ayant un volume de refoulement variable en continu, comportant un piston de réglage (1), sur lequel peut être appliquée une pression (P), provenant du côté sortie de la pompe (10, 20), et qui, en présence d'un pression croissante, peut coulisser contre la force d'un élément élastique de rappel (2), caractérisé en ce que le régulateur est conçu comme un régulateur à plusieurs étages, dans lequel le piston de réglage (1) est constitué de plusieurs pistons partiels (3, 4), sur lesquels est appliquée simultanément une pression, pistons partiels qui peuvent subir simultanément un déplacement latéral sur un trajet de réglage délimité, auquel cas on prévoit pour au moins l'un des pistons partiels (4) une butée (9) qui, en présence d'une pression croissante, limite son trajet de réglage contre la direction de la force de l'élément de rappel (2), tandis que l'autre piston partiel (3) reste mobile contre la force de l'élément de rappel (2).

2. Régulateur selon la revendication 1, caractérisé en ce qu'un premier piston partiel est un piston central intérieur (3), qui est mobile à l'intérieur du deuxième piston partiel, configuré comme un piston annulaire extérieur (4).

3. Régulateur selon la revendication 2, caractérisé en ce que le piston central (3) est en prise avec un ressort de compression (2) servant d'élément de rappel, et le piston annulaire (4) présente, pour permettre le déplacement simultané du piston central (3), un élément d'entraînement (5), de préférence sous forme d'un circlips.

4. Régulateur selon la revendication 1 ou 2, caractérisé en ce que le diamètre extérieur du piston central est approximativement égal au diamètre intérieur du piston annulaire, de sorte que le piston central peut être logé avec un ajustement étroit dans le piston annulaire.

5. Régulateur selon l'une des revendications 2 à 4, caractérisé en ce qu'un cylindre de guidage (33) est prévu, qui comporte une première chambre de cylindre, dont le diamètre intérieur correspond approximativement au diamètre extérieur du piston annulaire (4), en étant suivi, par l'intermédiaire d'un rétrécissement étagé de la première chambre de cylindre, d'une deuxième chambre de cylindre dont le diamètre intérieur correspond au diamètre extérieur du piston central (3), l'étage de transition entre les chambres du cylindre formant une butée (9) pour le piston annulaire (4).

6. Régulateur selon l'une des revendications 1 à 5, caractérisé en ce que la butée (9) est réglable en position.

7. Régulateur selon la revendication 6, caractérisé en ce que la butée (9) est automatiquement réglable en position en fonction de la température.

8. Régulateur selon la revendication 7, caractérisé en ce que la direction du réglage en position est choisie de façon à mettre à disposition, à basse température, un trajet de réglage plus grand pour le piston partiel (4) dont la course est limitée par une butée.

9. Régulateur selon la revendication 1, caractérisé en ce que les pistons partiels sont des pistons parallèles non-emboîtés.
